# FASCICULE DE BREVET EUROPEEN

(11) **EP 3 580 836 B1**
(45) Date de publication et mention de la délivrance du brevet: **17.04.2024**
(21) Numéro de dépôt: 18710508.5
(22) Date de dépôt: 08.02.2018
(51) Int. Cl.: H02K 5/24, H02K 9/22, H02K 11/33

(54) **DISPOSITIF DE PULSION D'AIR POUR UN DISPOSITIF DE CHAUFFAGE, DE VENTILATION ET/OU DE CLIMATISATION D'UN VEHICULE AUTOMOBILE**
LUFTPULSVORRICHTUNG FÜR EINE HEIZUNGS-, LÜFTUNGS- ODER KLIMAANLAGE EINES KRAFTFAHRZEUGS
AN AIR PULSE DEVICE FOR A MOTOR VEHICLE HEATING, VENTILATION AND/OR AIR CONDITIONING DEVICE

(30) Priorité: 13.02.2017 FR 1751148
(43) Date de publication de la demande: 18.12.2019
(73) Titulaire: Valeo Systemes Thermiques, 78322 Le Mesnil Saint-Denis Cedex (FR)
(72) Inventeur: CAPOULUN, Geoffroy, 78322 Le Mesnil Saint-Denis Cedex (FR)
(74) Mandataire: Valeo Systèmes Thermiques
(86) Numéro de dépôt international: PCT/FR2018/050309
(87) Numéro de publication internationale: WO 2018/146424

(56) Documents cités:
- EP-A1- 1 320 172
- EP-A2- 1 215 395
- EP-A2- 2 098 733
- WO-A1-2006/061389
- DE-B- 1 038 642
- DE-C1- 10 205 399
- DE-U1-202008 004 406
- US-B1- 6 236 126

## Description

La présente invention se rapporte au domaine des dispositifs de chauffage, de ventilation et/ou de climatisation pour véhicules automobiles, et elle concerne plus particulièrement un ensemble de montage d'un moteur électrique dans un tel dispositif.

Les véhicules automobiles sont couramment équipés de dispositifs de chauffage, ventilation et/ou climatisation, qui permettent de générer un ou plusieurs flux d'air et d'en gérer la température et la distribution au sein de l'habitacle du véhicule. Ces dispositifs de chauffage, ventilation et/ou climatisation comportent, entre autres, un dispositif de pulsion d'air mis en marche par un moteur électrique pour générer un flux d'air. Par dispositif de pulsion d'air, on entend un dispositif permettant d'aspirer et/ou de souffler de l'air. Le moteur électrique est notamment un moteur électrique à commutation électronique, piloté par un module d'alimentation pour entraîner en rotation une roue de ventilation.

Un tel moteur, également connu sous la dénomination anglaise de « brushless » (moteur à courant continu sans balai), comporte classiquement un rotor et un stator, dont chacun est porteur d'éléments électromagnétiques dont l'interaction génère le déplacement du rotor relativement au stator, et donc le déplacement de la roue de ventilation. Le rotor et le stator sont montés indépendamment l'un de l'autre dans ce moteur, et il convient de s'assurer que le positionnement relatif de ces deux composants est correct pour un fonctionnement optimal du moteur.

L'assemblage d'un tel moteur électrique dans le dispositif de chauffage, ventilation et/ou climatisation est réalisé par l'intermédiaire d'un ensemble de montage qui comprend avantageusement une bague intérieure configurée pour accueillir le stator du moteur électrique et une bague extérieure apte à être fixée à un élément de structure du véhicule formant boîtier de réception du dispositif de chauffage, ventilation et/ou climatisation.

Lorsque le moteur est en fonctionnement, le stator est soumis à des vibrations et contraintes dues au mouvement en rotation du rotor, et il est recherché que ces vibrations ne soient pas transmises à la bague extérieure fixée à la structure véhicule, afin d'éviter une usure prématurée de l'ensemble et de limiter les éventuels bruits résultant de telles vibrations. On prévoit alors un élément de découplage interposé radialement entre les deux bagues, dont le rôle principal est de filtrer les vibrations générées par le moteur et de supprimer ou, à tout le moins, de limiter au maximum, leur transmission, via le boîtier, au dispositif de chauffage, ventilation et/ou climatisation et à la structure du véhicule.

Cet élément de découplage est réalisé dans un matériau apte à remplir le rôle attendu vis-à-vis des vibrations mécaniques et acoustiques, et par exemple, en un matériau élastomère. On peut prévoir que cet élément de découplage présente la forme d'une bague annulaire s'étendant de façon continue tout autour de la bague intérieure, ou sous la forme d'une pluralité d'éléments discrets répartis régulièrement angulairement entre bague intérieure et bague extérieure. Quelle que soit la forme prise par cet élément de découplage, il entre dans son rôle de limiter au maximum, voire de supprimer, en particulier, tout mouvement relatif trop important des bagues intérieure et extérieure l'une par rapport à l'autre.

Il peut toutefois se produire que, dans certaines situations spécifiques, la partie découplée entre en résonnance, excitée par le balourd du moteur. Ceci se produit, notamment, lorsque la fréquence de résonnance de la partie découplée se trouve comprise dans la plage de fréquence de rotation du moteur électrique. Il en résulte un effet contraire à l'effet recherché en termes de réduction des vibrations. Une solution pour pallier cet inconvénient est de rigidifier l'élément de découplage, par exemple en choisissant un matériau moins souple et/ou en lui donnant une forme moins facilement déformable. Ceci va toutefois à l'encontre de la recherche initiale de filtration des vibrations, cette dernière étant d'autant plus efficace que l'élément de découplage est souple et élastique.

Le document EP 2098733 A2 divulgue un dispositif de pulsion d'air selon le préambule de la revendication 1.

Le but de la présente invention est de proposer un ensemble de montage d'un moteur dans un dispositif de pulsion d'air pour un dispositif de chauffage, ventilation et/ou climatisation d'un véhicule automobile qui soit de réalisation simple et dans lequel la transmission des vibrations générées par le fonctionnement du moteur électrique soit réduite au maximum, voire supprimée, ainsi que les phénomènes éventuels d'entrée en résonnance au sein de cet ensemble de montage.

Dans ce but, l'invention a pour objet un dispositif de pulsion d'air défini selon la revendication 1.

Les moyens d'amortissement peuvent consister en un ou plusieurs système comportant au moins un ressort ou des amortisseurs, ou bien en des amortisseurs harmoniques, venant en complément de l'élément de découplage intercalé entre les deux bagues. Ces moyens d'amortissement sont associés à la bague intérieure configurée pour recevoir le stator du moteur, et ils sont interposés entre la bague intérieure et au moins un élément du moteur distinct du stator.

Le sous-ensemble de l'ensemble de montage selon l'invention, formé par les moyens d'amortissement et cet élément du moteur distinct du stator constitue alors un ensemble du type "masse-ressort" appelé, en fonction des mouvements qui lui seront transmis par l'intermédiaire du stator du moteur, à entrer en résonnance, à une ou plusieurs fréquences propres, définies à la fois par la masse de cet ensemble et par les propriétés élastiques du ou des matériaux choisis pour réaliser les moyens d'amortissement, au moins une fréquence propre étant égale ou sensiblement égale à la fréquence propre d'oscillation de l'élément de découplage interposé entre les bagues de l'ensemble de montage. Il s'ensuit que, au sein de l'ensemble de montage selon l'invention, ce sous-ensemble joue le rôle d'un amortisseur du type amortisseur harmonique. Par sensiblement égal, on comprend que la fonction d'amortisseur harmonique pourra être obtenue avec une fréquence propre d'oscillation des moyens d'amortissement voisine de la fréquence propre d'oscillation du dispositif de pulsion d'air et notamment de la partie découplée par l'intermédiaire de l'élément de découplage. Par un choix avantageux du matériau constituant les moyens d'amortissement, ainsi que par un dimensionnement avantageux de ces éléments relativement à la masse de l'ensemble formé par l'élément dissipateur thermique et par les moyens électroniques de commande du moteur, il devient alors possible de définir ces moyens d'amortissement pour que la fréquence de résonnance de l'ensemble du type "masse-ressort" précité soit telle qu'elle supprime totalement tout risque d'entrée en résonnance de l'ensemble de montage selon l'invention.

Selon l'invention, les moyens d'amortissement sont disposés entre un bloc de refroidissement et de commande du moteur et une paroi de la bague intérieure.

Selon un premier mode de réalisation de l'invention, le bloc de refroidissement et de commande du moteur est au moins en partie escamoté dans un logement d'accueil formé dans la bague intérieure, lesdits moyens d'amortissement étant agencés radialement entre ce bloc de refroidissement et de commande et une paroi définissant ledit logement d'accueil, en une conformation sensiblement annulaire.

Lesdits moyens d'amortissement peuvent consister en une bague annulaire. Cette bague annulaire peut être formée en un matériau dont la fréquence propre d'oscillation est sensiblement égale à celle du matériau utilisé pour former l'élément de découplage interposé entre les bagues de l'ensemble de montage. Lesdits moyens d'amortissement peuvent également consister en une pluralité d'éléments distincts, agencés circulairement. Dans ce dernier cas, la répartition angulaire de ces éléments entre bague intérieure et bague extérieure peut être régulière ou non, en fonction de la configuration des bagues intérieure et extérieure et de la configuration du moteur. Quelle que soit leur configuration, ces moyens d'amortissement ont pour fonction essentielle de limiter les mouvements relatifs de la bague intérieure et de la bague extérieure entre elles.

Selon un deuxième mode de réalisation de l'invention, le bloc de refroidissement et de commande du moteur est disposé en regard d'une face d'extrémité de la bague intérieure, lesdits moyens d'amortissement étant agencés axialement entre la bague intérieure et le bloc de refroidissement et de commande, en une conformation sensiblement circulaire. Notamment, on pourra prévoir que lesdits moyens d'amortissement consistent en au moins un ressort agencé entre deux faces en regard de la bague intérieure et du bloc de refroidissement et de commande du moteur.

Dans chacun des modes de réalisation, on peut prévoir que le bloc de refroidissement et de commande est connecté électriquement au stator par des moyens de connexion flexibles.

Il est notable par ailleurs que dans chacun des modes de réalisation, on peut prévoir que l'élément de découplage et les moyens d'amortissement sont agencés selon des formes respectivement circulaires, autour d'axe sensiblement parallèles entre eux.

L'invention concerne également un dispositif de chauffage, de ventilation et/ou de climatisation pour un véhicule automobile, comportant un moteur d'entrainement d'un dispositif de pulsion d'air et dans lequel ce moteur est disposé dans le dispositif de pulsion d'air par l'intermédiaire d'un ensemble de montage tel que présenté précédemment.

D'autres caractéristiques, détails et avantages de l'invention ressortiront plus clairement à la lecture de la description qui suit d'un de ses modes de réalisation, donnée ci-après à titre indicatif, en relation avec les figures suivantes :
- la figure 1 est une vue générale schématique en coupe d'un ensemble de montage d'un moteur électrique selon un premier mode de réalisation de l'invention ; et
- les figures 2 et 3 sont des vues de côté et en perspective d'un ensemble de montage d'un moteur électrique selon un deuxième mode de réalisation de l'invention, un bloc de refroidissement et de commande du moteur, illustré sur la figure 2, étant non représenté sur la figure 3 pour rendre visible les moyens d'amortissement selon l'invention.

Tel que cela a été présenté précédemment, la présente invention concerne un dispositif de pulsion d'air d'un dispositif de chauffage, ventilation et/ou climatisation d'un véhicule automobile, comportant un ensemble de montage d'un moteur électrique.

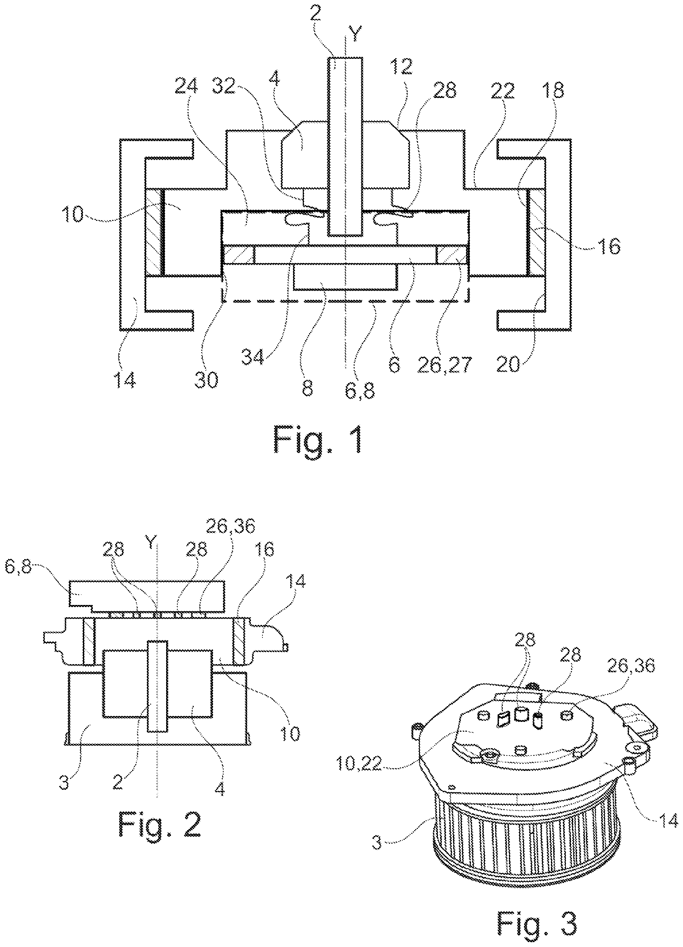

Par moteur électrique, on entend, dans les exemples illustrés sur les figures, un rotor 2, rendu solidaire en rotation d'un composant du dispositif de pulsion d'air tel une roue à ailettes 3 (visible sur les figures 2 et 3) et mu en rotation par sa coopération avec un stator 4, le moteur électrique comportant en outre un radiateur formant dissipateur thermique 6 et un ensemble électronique 8 de commande du moteur électrique.

Ce moteur est monté sur un ensemble de montage qui comprend une bague intérieure 10, dont une partie 12 forme un premier logement d'accueil du stator 4 du moteur électrique, une bague extérieure 14, et un élément de découplage 16 interposé radialement entre les bagues.

La bague extérieure 14 est fixée sur un boîtier, non représenté sur les figures, du dispositif de chauffage, ventilation et/ou climatisation formant élément de structure du véhicule, rendant ainsi l'ensemble de montage selon l'invention solidaire de ce boîtier.

Comme le montre la figure 1, la bague intérieure 10, la bague extérieure 14, et l'élément de découplage 16 sont sensiblement coaxiaux avec l'axe de rotation de l'ensemble rotor/stator du moteur électrique, matérialisé par l'axe Y. L'élément de découplage 16, disposé entre une paroi extérieure 18 de la bague intérieure 10 et une paroi intérieure 20 de la bague extérieure 14, peut consister en un élément annulaire ou bien se présenter sous la forme d'une pluralité d'éléments distincts répartis entre les bagues, étant entendu que ces éléments distincts peuvent être avantageusement angulairement régulièrement répartis à la périphérie de la bague intérieure.

Dans ces deux cas, le matériau constituant l'élément de découplage 16, ainsi que les dimensions de ce dernier, sont définis pour limiter au maximum, voire pour supprimer tout mouvement relatif de la bague intérieure 10 et de la bague extérieure 14 entre elles. Ainsi, le matériau constituant l'élément de découplage 16 sera avantageusement choisi pour ses propriétés d'élasticité et de souplesse, et il pourra notamment consister en un matériau élastomère.

Le stator 4 du moteur est agencé dans le premier logement d'accueil 12 formé sur une première face 22 de la bague intérieure 10. Selon l'invention, l'élément dissipateur thermique 6 et l'ensemble électronique 8 de commande du moteur sont avantageusement accueillis ensemble dans un deuxième logement 24 agencé dans la bague intérieure 10, du côté opposé à la première face 22.

L'élément dissipateur thermique 6 et l'ensemble électronique 8 de commande du moteur peuvent être, par exemple, portés par un support spécifique lui-même reçu dans le deuxième logement d'accueil ou simplement fixés ensemble par des moyens appropriés. Pour simplifier la lecture, l'ensemble formé par l'élément dissipateur thermique 6 et l'ensemble électronique 8 de commande sera désigné dans ce qui suit sous l'appellation de "bloc de refroidissement et de commande 6,8".

Selon l'invention, l'ensemble de montage comporte un sous-ensemble du type masse-ressort formé par des moyens d'amortissement 26 et au moins un élément du moteur distinct du stator, au moins une fréquence de résonance de ce sous-ensemble étant choisie égale ou sensiblement égale à la fréquence propre d'oscillation de l'élément de découplage intercalé entre les deux bagues.

Ces moyens d'amortissement 26 sont associés à la bague intérieure 10 associée par ailleurs à l'élément de découplage, et ils sont avantageusement interposés entre le bloc de refroidissement et de commande, en tant que composant du moteur distinct du stator, et la bague intérieure.

Les moyens d'amortissement 26 forment un amortisseur harmonique, agencé entre la bague intérieure 10 et le bloc de refroidissement et de commande. Des moyens de connexion électrique 28 appropriés sont par ailleurs prévus pour relier le bloc de refroidissement et de commande 6,8 et le stator 4.

Le sous-ensemble est un système étagé d'amortissement distinct de l'élément de découplage 16, et prend la forme d'un ensemble du type "masse-ressort" apte à osciller et/ou à vibrer et à entrer en résonnance selon une fréquence propre égale ou sensiblement égale à la fréquence propre d'oscillation de l'élément de découplage disposé entre les bagues. Lorsque les bagues intérieure 10 et extérieure 14 et l'élément de découplage 16 sont soumis aux vibrations générées par le fonctionnement du moteur, cet ensemble du type "masse-ressort" peut donc, en fonction de ses caractéristiques intrinsèques, jouer le rôle d'amortisseur harmonique apte à compenser les vibrations de l'ensemble moteur. A cette fin, l'ensemble du type "masse-ressort" doit avoir une fréquence de résonnance propre précisément définie au regard de la fréquence d'entrée en résonnance de ces composants et il convient que la masse d'au moins un composant de cet ensemble du type masse-ressort soit significative par rapport à la masse du dispositif de pulsion d'air. On comprend que dans le cas présent, le fait de choisir le radiateur 6 pour être découplé, via les moyens d'amortissement, de la bague intérieure et du stator permet de s'assurer de ce rapport de poids.

À titre d'exemple, dans un moteur du type couramment utilisé pour la réalisation de dispositifs de chauffage, ventilation et/ou climatisation de véhicules automobiles, la fréquence de résonnance de l'ensemble "masse-ressort" précédemment défini doit être de l'ordre de quelques dizaines de Hertz, typiquement comprise entre 20 et 50 Hz, afin que cet ensemble "masse-ressort" puisse amortir les fréquences harmoniques susceptibles d'entraîner l'entrée en résonnance de la partie découplée par l'intermédiaire de l'élément de découplage 16 suite aux vibrations du moteur. La fréquence de résonnance des moyens d'amortissement étant définie par les caractéristiques intrinsèques de ses composants, à savoir d'une part la masse du bloc de refroidissement et de commande et de façon plus négligeable la masse des moyens d'amortissement, et d'autre part les propriétés élastiques des moyens d'amortissement 26, et la masse d'un bloc de refroidissement et de commande tel que défini plus haut étant de l'ordre de quelques dizaines à quelques centaines de grammes, typiquement autour de 200 grammes, il s'ensuit que l'on peut définir précisément la masse et les caractéristiques d'élasticité des moyens d'amortissement pour atteindre ce but.

On va maintenant décrire un premier mode de réalisation de l'invention, en référence à la figure 1.

Le deuxième logement d'accueil 24 susceptible de recevoir le bloc de refroidissement et de commande est creusé dans l'épaisseur de la bague intérieure 10, en présentant une forme de révolution sensiblement coaxiale, d'axe Y, avec le stator 4, et le bloc de refroidissement et de commande, au moins en partie, est escamoté dans ce deuxième logement d'accueil 24.

Les moyens d'amortissement 26 sont agencés radialement entre le bloc de refroidissement et de commande et la bague intérieure et se présentent ici sous la forme d'un élément 27 sensiblement annulaire, de type bague annulaire, interposé radialement entre une paroi intérieure 30 de ce deuxième logement 24 et le bloc de refroidissement et de commande du moteur. Le matériau utilisé pour réaliser les moyens d'amortissement est avantageusement choisi pour ses propriétés mécaniques de souplesse et d'élasticité et peut notamment consister en un matériau élastomère, qui peut être le même que celui choisi pour réaliser l'élément de découplage 16.

On pourra prévoir que, conformément à ce qui a été décrit pour l'élément de découplage 16, les moyens d'amortissement 26 peuvent prendre la forme d'une pluralité d'éléments amortisseurs en élastomère, régulièrement répartis sur la paroi intérieure 30 du deuxième logement d'accueil pour former des points de contact avec le bloc de refroidissement et de commande.

Dans les deux cas, les moyens d'amortissement 26 sont agencés de manière circulaire autour d'un axe sensiblement confondu avec l'axe Y de rotation de l'ensemble stator/rotor, et sensiblement confondu avec l'axe définissant la forme annulaire de l'élément de découplage 16.

Les moyens de connexion électrique 28 sont destinés à assurer la connexion électrique entre le stator 4, pour la mise en rotation du rotor correspondant, et l'ensemble électronique 8 de commande du moteur. Ces moyens consistent en des languettes présentant au moins une partie flexible. Chaque languette comporte au moins une première partie 32 configurée pour traverser une ouverture correspondante dans la bague intérieure, de manière à déboucher sur la première face 22 et pouvoir être relié au stator, et une deuxième partie 34 flexible, logée à l'intérieur du deuxième logement d'accueil et susceptible de s'étendre pour accompagner les mouvements du bloc de refroidissement et de commande. Le matériau utilisé pour réaliser ces moyens de connexion électrique est avantageusement choisi pour ses propriétés mécaniques de souplesse et d'élasticité, ainsi que pour ses propriétés électriques le rendant apte à établir un contact électrique entre le stator 4 et, notamment, l'ensemble électronique 8 de commande.

On va maintenant décrire un deuxième mode de réalisation de l'invention, en référence à la figure 2, qui diffère de ce qui a été décrit précédemment en ce que le bloc de refroidissement et de commande n'est pas escamoté dans un deuxième logement d'accueil mais est en regard d'une face d'extrémité de la bague intérieure, en saillie de celle-ci, ce qui implique une forme particulière des moyens d'amortissement, qui sont agencés dans ce mode de réalisation axialement entre une face d'extrémité, ici la première face 22, de la bague intérieure et le bloc de refroidissement et de commande.

Les moyens d'amortissement 26 consistent en une pluralité, ici trois, de ressorts 36 agencés entre deux faces en regard du bloc de refroidissement et de commande 6,8, notamment de l'élément dissipateur thermique, et de la bague intérieure 10. Les ressorts 36 présentent dans ce cas la forme de ressorts hélicoïdaux, orientés de sorte que leur sens d'étirement soit sensiblement parallèle à l'axe de rotation de l'ensemble formé par le rotor 2 et le stator 4.

Tel que cela est visible sur la figure 3, les ressorts 36 sont agencés en une disposition circulaire autour d'un axe sensiblement parallèle à l'axe Y de rotation de l'ensemble rotor/stator, de sorte que, conformément au premier mode de réalisation, l'élément de découplage et les moyens d'amortissement sont agencés selon des formes respectivement circulaires, autour d'axe sensiblement parallèles entre eux.

Comme dans le premier mode de réalisation, des moyens de connexion formés par des languettes conductrices flexibles 28 sont prévus pour le raccordement électrique du stator et de l'ensemble électronique de commande.

Dans chacun des modes de réalisation, une caractéristique des moyens d'amortissement, que ce soit la souplesse de l'élastomère dans le cas du premier mode de réalisation ou la raideur des ressorts dans le cas du deuxième mode de réalisation, est dimensionnée pour que la fréquence propre d'oscillation du sous-ensemble du type masse-ressort soit égale à la fréquence propre d'oscillation de l'élément de découplage 16 interposé entre les bagues de l'ensemble de montage.

L'invention atteint ainsi le but qu'elle s'était fixé, en proposant un dispositif de pulsion d'air d'un dispositif de chauffage, climatisation et/ou ventilation d'un véhicule automobile, dans lequel tout risque de bruit résultant de vibrations est limité au maximum, qu'il s'agisse de bruits directement induits par les mouvements relatifs de différents éléments de cet ensemble de montage sous l'effet des vibrations de ce moteur, ou qu'il s'agisse de bruits résultant de l'entrée en résonnance, à certaines fréquences dépendant de la fréquence dudit moteur, de certains éléments de ce même ensemble de montage.

La mise en place d'un étage d'amortissement complémentaire et son dimensionnement pour que la fréquence de résonnance de cet étage d'amortissement soit sensiblement égale à la fréquence de résonnance du dispositif de pulsion d'air, et plus particulièrement de la partie découplée de ce dispositif par l'intermédiaire de l'élément de découplage intercalé par ailleurs entre les bagues de l'ensemble de montage, permet de prévoir un élément de découplage plus souple tout en limitant les bruits de fonctionnement du dispositif de pulsion d'air et en améliorant la résistance aux vibrations de l'ensemble.

L'invention ne saurait toutefois se limiter aux moyens et configurations décrits et illustrés, mais elle s'étend également à tous moyens, ou configurations, équivalents et à toute combinaison techniquement opérante de tels moyens, sans quitter l'étendue de protection définie par la revendication indépendante 1.

## Revendications

1. Dispositif de pulsion d'air pour un dispositif de chauffage, de ventilation et/ou de climatisation d'un véhicule automobile, comportant un moteur d'entrainement disposé dans le dispositif de pulsion d'air par l'intermédiaire d'un ensemble de montage qui comprend deux bagues sensiblement coaxiales dont une bague intérieure (10) comportant une partie comprenant un premier logement d'accueil (12) apte à recevoir au moins un stator (4) dudit moteur et une bague extérieure (14) apte à être fixée sur un boîtier formant élément de structure du véhicule, ainsi qu'un élément de découplage (16) intercalé entre les deux bagues, la bague intérieure (10), la bague extérieure (14) et l'élément de découplage (16) étant sensiblement coaxiaux avec un axe de rotation (Y) du moteur, **caractérisé en ce que**
l'ensemble de montage comporte en outre un sous-ensemble du type masse-ressort formé par des moyens d'amortissement (26) et au moins un élément du moteur distinct du stator (4), au moins une fréquence de résonnance de ce sous-ensemble étant choisie égale ou sensiblement égale à la fréquence propre d'oscillation de l'élément de découplage (16) intercalé entre les deux bagues,
l'au moins un élément du moteur distinct du stator (4) étant un bloc de refroidissement et de commande (6,8) du moteur, les moyens d'amortissement (26) étant disposés entre le bloc de refroidissement et de commande du moteur et une paroi de la bague intérieure (10), le bloc de refroidissement et de commande du moteur (6,8) étant
ou bien au moins en partie escamoté dans un logement d'accueil (24) formé dans la bague intérieure (10), les moyens d'amortissement (26) étant agencés radialement par rapport à l'axe de rotation (Y) entre ce bloc de refroidissement et de commande (6,8) et une paroi (30) définissant ledit logement d'accueil, en une conformation sensiblement annulaire,
ou bien disposé en regard d'une face d'extrémité de la bague intérieure (10), les moyens d'amortissement (26) étant agencés axialement par rapport à l'axe de rotation (Y) entre la bague intérieure (10) et le bloc de refroidissement et de commande (6,8), en une conformation sensiblement circulaire.

2. Ensemble selon la revendication 1, **caractérisé en ce que** les moyens d'amortissement (26) consistent en une bague annulaire.

3. Ensemble selon la revendication 1, **caractérisé en ce que** les moyens d'amortissement (26) consistent en une pluralité d'éléments distincts, agencés circulairement.

4. Ensemble selon la revendication 1, **caractérisé en ce que** lesdits moyens d'amortissement (26) consistent en au moins un ressort (36) agencé entre deux faces en regard de la bague intérieure (10) et du bloc de refroidissement et de commande du moteur (6,8).

5. Ensemble selon l'une des revendications précédentes, **caractérisé en ce que** l'élément de découplage (16) et les moyens d'amortissement (26) sont agencés selon des formes respectivement circulaires, autour d'axe sensiblement parallèles entre eux.

6. Dispositif de chauffage, de ventilation et/ou de climatisation pour un véhicule automobile, **caractérisé en ce qu'**il comporte un dispositif de pulsion d'air selon l'une quelconque des revendications précédentes.

## Patentansprüche

1. Luftpulsvorrichtung für eine Heizungs-, Lüftungs- und/oder Klimaanlage eines Kraftfahrzeugs, umfassend einen Antriebsmotor, der in der Luftpulsvorrichtung mittels einer Montageanordnung angeordnet ist, die Folgendes beinhaltet: zwei im Wesentlichen koaxiale Ringe, einer davon ein Innenring (10), der einen Abschnitt umfasst, der eine erste Aufnahmeaussparung (12) beinhaltet, die dazu fähig ist, mindestens einen Stator (4) des Motors aufzunehmen, und einer davon ein Außenring (14), der dazu fähig ist, an einem Gehäuse befestigt zu sein, der ein Strukturelement des Fahrzeugs bildet, sowie ein Entkopplungselement (16), das zwischen den zwei Ringen eingefügt ist, wobei der Innenring (10), der Außenring (14) und das Entkopplungselement (16) zu einer Drehachse (Y) des Motors im Wesentlichen koaxial sind, **dadurch gekennzeichnet, dass** die Montageanordnung ferner eine Masse-Feder-Baugruppe umfasst, die aus Dämpfungsmitteln (26) und mindestens einem von dem Stator (4) verschiedenen Element des Motors gebildet ist, wobei mindestens eine Resonanzfrequenz dieser Baugruppe so ausgewählt ist, dass sie gleich oder im Wesentlichen gleich der Schwingungseigenfrequenz des Entkopplungselements (16) ist, das zwischen den zwei Ringen eingefügt ist,
wobei das mindestens eine von dem Stator (4) verschiedene Element des Motors ein Kühl- und Steuerblock (6, 8) des Motors ist, wobei die Dämpfungsmittel (26) zwischen dem Kühl- und Steuerblock des Motors und einer Wand des Innenrings (10) angeordnet sind, wobei der Kühl- und Steuerblock des Motors (6, 8)
entweder mindestens teilweise in einer Aufnahmeaussparung (24) versenkt ist, die in dem Innenring (10) gebildet ist, wobei die Dämpfungsmittel (26) in Bezug auf die Drehachse (Y) radial zwischen diesem Kühl- und Steuerblock (6, 8) und einer Wand (30), die die Aufnahmeaussparung definiert, in einer im Wesentlichen ringförmigen Konfiguration eingerichtet sind,
oder gegenüber einer Stirnfläche des Innenrings (10) angeordnet ist, wobei die Dämpfungsmittel (26) in Bezug auf die Drehachse (Y) axial zwischen dem Innenring (10) und dem Kühl- und Steuerblock (6, 8) in einer im Wesentlichen kreisförmigen Konfiguration eingerichtet sind.

2. Anordnung nach Anspruch 1, **dadurch gekennzeichnet, dass** die Dämpfungsmittel (26) aus einem ringförmigen Ring bestehen.

3. Anordnung nach Anspruch 1, **dadurch gekennzeichnet, dass** die Dämpfungsmittel (26) aus einer Vielzahl von verschiedenen Elementen bestehen, die kreisförmig eingerichtet sind.

4. Anordnung nach Anspruch 1, **dadurch gekennzeichnet, dass** die Dämpfungsmittel (26) aus mindestens einer Feder (36) bestehen, die zwischen zwei gegenüberliegenden Flächen des Innenrings (10) und des Kühl- und Steuerblocks des Motors (6, 8) eingerichtet ist.

5. Anordnung nach einem der vorhergehenden Ansprüche, **dadurch gekennzeichnet, dass** das Entkopplungselement (16) und die Dämpfungsmittel (26) gemäß jeweils kreisförmigen Formen um eine Achse im Wesentlichen parallel zueinander eingerichtet sind.

6. Heizungs-, Lüftungs- und/oder Klimaanlage für ein Kraftfahrzeug, **dadurch gekennzeichnet, dass** sie eine Luftpulsvorrichtung nach einem beliebigen der vorhergehenden Ansprüche umfasst.

## Claims

1. Air pulsing device for a heating, ventilation and/or air-conditioning device of a motor vehicle, having a drive motor disposed in the air pulsing device via a mounting assembly that comprises two substantially coaxial rings, these being an inner ring (10) having a part comprising a first accommodating housing (12) that is able to receive at least one stator (4) of said motor and an outer ring (14) that is able to be fastened to a casing forming a structural element of the vehicle, and a decoupling element (16) interposed between the two rings, the inner ring (10), the outer ring (14) and the decoupling element (16) being substantially coaxial with an axis of rotation (Y) of the motor, **characterized in that** the mounting assembly also has a subassembly of the mass-spring type formed by damping means (26) and at least one element of the motor that is distinct from the stator (4), at least one resonant frequency of this subassembly being chosen to be equal or substantially equal to the inherent frequency of oscillation of the decoupling element (16) interposed between the two rings, the at least one element of the motor that is distinct from the stator (4) being a cooling and control unit (6,8) of the motor, the damping means (26) being disposed between the cooling and control unit of the motor and a wall of the inner ring (10), the cooling and control unit of the motor (6,8) being
either at least partially stowed in an accommodating housing (24) formed in the inner ring (10), the damping means (26) being arranged radially with respect to the axis of rotation (Y) between this cooling and control unit (6,8) and a wall (30) defining said accommodating housing, with substantially annular shaping,
or disposed facing an end face of the inner ring (10), the damping means (26) being arranged axially with respect to the axis of rotation (Y) between the inner ring (10) and the cooling and control unit (6,8), with substantially circular shaping.

2. Assembly according to Claim 1, **characterized in that** the damping means (26) consist of an annular ring.

3. Assembly according to Claim 1, **characterized in that** the damping means (26) consist of a plurality of distinct elements, arranged circularly.

4. Assembly according to Claim 1, **characterized in that** said damping means (26) consist of at least one spring (36) arranged between two facing faces of the inner ring (10) and of the cooling and control unit of the motor (6,8) .

5. Assembly according to one of the preceding claims, **characterized in that** the decoupling element (16) and the damping means (26) are arranged according to respectively circular shapes, about axes that are substantially mutually parallel.

6. Heating, ventilation and/or air-conditioning device for a motor vehicle, **characterized in that** it has an air pulsing device according to any one of the preceding claims.
